# EUROPÄISCHE PATENTSCHRIFT

(11) **EP 2 371 026 B1**
(45) Veröffentlichungstag und Bekanntmachung des Hinweises auf die Patenterteilung: **01.05.2013**
(21) Anmeldenummer: 09760816.0
(22) Anmeldetag: 19.11.2009
(51) Int. Cl.: H01M 10/50, H01M 10/0525, B60H 1/00, B60L 3/00, B60L 11/18

(54) **BATTERIEMODUL**
BATTERY MODULE
MODULE DE BATTERIE

(30) Priorität: 28.11.2008 DE 102008044169
(43) Veröffentlichungstag der Anmeldung: 05.10.2011
(73) Patentinhaber: Robert Bosch GmbH, 70442 Stuttgart (DE)
(72) Erfinder: BARTENSCHLAGER, Ursula, 74629 Pfedelbach (DE)
(86) Internationale Anmeldenummer: PCT/EP2009/065489
(87) Internationale Veröffentlichungsnummer: WO 2010/060856

(56) Entgegenhaltungen:
- JP-A- 2003 197 277
- JP-A- 2005 285 456

## Beschreibung

Die Erfindung betrifft ein Batteriemodul gemäß dem Oberbegriff des Anspruches 1. Ferner betrifft die Erfindung ein Batteriemodulsystem und ein Kraftfahrzeug.

### Stand der Technik

Batterien, z. B. Lithiumionenbatterien oder Zebra-Batterien, versorgen verschiedene Einrichtungen, z. B. Kraftfahrzeuge, Krankenhäuser oder Bohrmaschinen, mit elektrischem Strom. Insbesondere bei Lithiumionenbatterien ist eine geringe Temperaturdifferenz von weniger als 4 K erforderlich. Des Weiteren soll bei Lithiumionenbatterien die Temperatur nicht höher als 60° C liegen. Im Allgemeinen werden mehrere Batterien in einem Gehäuse eingebaut und dadurch ein Batteriemodul gebildet. Batteriemodule haben den Vorteil, dass diese leichter gekühlt und höhere elektrische Leistungen durch die Kombination mehrerer Batteriemodule zu einem Batteriemodulsystem einfach realisiert werden können.

Die in einem Batteriemodul angeordneten Batterien werden von einem strömenden Kühlfluid mittels Konvektion, d. h. Massetransport, temperiert, d. h. gekühlt oder erwärmt. Hierzu weist das Batteriemodul wenigstens eine Einlassöffnung und wenigstens eine Auslassöffnung auf, durch die das Temperierfluid ein- und ausgeleitet wird. Zum Umwälzen des Temperierfluides wird eine Fluidfördereinrichtung, z. B. ein Gebläse für Luft als Temperierfluid, benötigt. Zum Umwälzen des Temperierfluides ist somit ein hoher Energieaufwand notwendig und ferner können aufgrund der bewegten mechanischen Teile der Fluidfördereinrichtung leicht Schäden auftreten. Bei einer Verwendung eines derartigen Batteriemoduls kann aufgrund des rotierenden Elementes in der Gasfördereinrichtung der Drall einer im Weltraum befindlichen Raumstation negativ beeinflusst werden.

JP 2003 1927 A offenbart ein Batteriemodul, in dem mehrere in Reihe geschaltete Batterien in mehreren Reihen angeordnet sind. Zwischen diesen Batterien sind Wärmerohre vorgesehen, über die Wärme aus dem Batteriemodul abgeführt werden kann. Mindestens ein Wärmerohr ist mit Kühlrippen verbunden.

JP 2005 285456 A offenbart ein Batteriesystem, in dem mehrere Batteriemodule enthalten sind. Das Batteriemodul besteht aus einer Halterung, die Hohlräume aufweist, in die Batteriezellen eingepasst werden können. Die Wärme wird über Wärmestrahlungsplatten, die seitlich an der Halterung angebracht sind, abgeführt.

### Offenbarung der Erfindung

### Vorteile der Erfindung

Erfindungsgemäßes Batteriemodul, umfassend ein Gehäuse, wenigstens eine in dem Gehäuse angeordnete Batterie, wenigstens ein Mittel zum Temperieren, d. h. zum Kühlen und/oder Erwärmen, der wenigstens einen Batterie, wobei das wenigstens eine Mittel wenigstens ein Wärmerohr zum Leiten von Wärme von und/oder zu der wenigstens einen Batterie umfasst.

Ein Wärmerohr ist ein Wärmeübertrager, der unter Nutzung von Verdampfungswärme eines Stoffes eine hohe Wärmestromdichte erlaubt, d. h. auf einer kleinen Querschnittsfläche können große Mengen an Wärme transportiert werden. Der Wärmewiderstand eines Wärmerohres ist deutlich niedriger als der von Metallen, dadurch verhalten sich Wärmerohre nahezu isotherm (konstante Temperatur über die Länge des Wärmerohres). Bei gleicher übertragener Wärme sind sie wesentlich leichter als herkömmliche Wärmetauscher bzw. Wärmeübertrager wie z. B. ein Plattenwärmetauscher. Durch eine entsprechende Wahl des Arbeitsmediums des Wärmerohres lassen sich die für Batteriemodule notwendigen Einsatzbereiche, d. h. Temperaturbereiche, erzielen. Ein Wärmerohr kann somit die Batterien des Batteriemoduls einfach ohne bewegte mechanische Teile kühlen und/oder erwärmen, d. h. die Batterien des Batteriemoduls temperieren. In besonders vorteilhafter Weise ist damit eine Fluidfördereinrichtung, z. B. ein Gebläse, zum Umwälzen eines Temperierfluids und ein strömendes Temperierfluid nicht mehr erforderlich.

Zwischen wenigstens zwei Batterien ist wenigstens eine Finne aus einem wärmeleitenden Material, z. B. Metall, insbesondere Kupfer, angeordnet, die wenigstens eine Finne ist wärmeleitend mit dem wenigstens einen Wärmerohr verbunden. Zwischen den Batterien des Batteriemoduls sind Metallfinnen angeordnet, insbesondere aus Kupfer, welche die von den Batterien an der Oberfläche abgegebene Wärme aufnehmen und zu dem Wär-merohr leiten. Umgekehrt können die Metallfinnen auch Wärme zu den Batterien leiten zum Erwärmen der Batterien.

Zwei Finnen sind mit einer Platte aus einem wärmeleitenden Material, z. B. Metall, wärmeleitend verbunden und die Platte ist wärmeleitend mit dem wenigstens einen Wärmerohr verbunden. Im Bereich des Endes der Finnen sind die Finnen mit der Platte mechanisch und damit auch wärmeleitend verbunden. Die Platte fasst somit thermisch sämtliche Finnen zusammen, die zwischen den Batterien angeordnet sind, und an der Platte ist wärmeleitend das Wärmerohr angeordnet. Die von den Batterien abgegebene Wärme wird somit zunächst zu den Finnen geleitet, anschließend von den Finnen zu der Platte und von der Platte zu dem Wärmerohr und umgekehrt.

In einer weiteren Ausgestaltung ist die wenigstens eine Batterie in dem Gehäuse in einer, vorzugsweise elektrisch nicht leitenden, Flüssigkeit zur Wärmeleitung angeordnet. Die wärmeleitende Flüssigkeit innerhalb des Gehäuses der Batterie erhöht zusätzlich den Wärmeaustausch zwischen den Batterien und von den Batterien zu den Finnen bzw. der Platte, so dass die Temperaturdifferenz zwischen den Batterien gering ist, z. B. weniger als 4 K beträgt, d. h. eine homogene Temperaturverteilung innerhalb des Batteriemoduls ist gewährleistet.

In einer ergänzenden Ausgestaltung ist die Flüssigkeit ein Öl, z. B. Silikonöl.

Vorzugsweise bestehet das Gehäuse wenigstens teilweise aus Kunststoff oder Metall.

In einer Variante ist die wenigstens eine Batterie eine Lithiumionenbatterie.

Zweckmäßig ist das wenigstens eine Wärmerohr eine Heatpipe oder ein Thermosyphon.

Ein erfindungsgemäßes Batteriemodulsystem mit mehreren Batteriemodulen umfasst wenigstens ein beschriebenes Batteriemodul.

Insbesondere sind wenigstens zwei Batteriemodule mittels des wenigstens einen Wärmerohres wärmeleitend miteinander verbunden zum Temperieren, d. h. zum Kühlen und/oder Erwärmen, der wenigstens einen Batterie. Die Batteriemodule eines Batteriemodulsystems sind somit wärmeleitend mit dem Wärmerohr verbunden, so dass zwischen den Batteriemodulen des Batteriemodulsystems ein besonders guter Wärmeaustausch möglich ist und dadurch auch innerhalb des Batteriemodulsystems geringe Temperaturdifferenzen in den Batterien bzw. den Batteriemodulen auftreten.

Ein erfindungsgemäßes Kraftfahrzeug umfasst wenigstens ein beschriebenes Batteriemodul und/oder wenigstens ein beschriebenes Batteriemodulsystem.

In einer ergänzenden Variante ist zum Kühlen der wenigstens einen Batterie das wenigstens eine Wärmerohr wärmeleitend mit einer Wärmesenke verbunden oder verbindbar und/oder zum Erwärmen der wenigstens einen Batterie ist das wenigstens eine Wärmerohr mit einer Wärmequelle wärmeleitend verbunden oder verbindbar.

In einer weiteren Variante ist die Wärmesenke ein Verdampfer einer Klimaanlage und/oder ein Wärmeübertrager zur Übertragung von Wärme an die Umgebungsluft und/oder eine Karosserie des Kraftfahrzeuges. Bei der Verwendung eines Verdampfers als Wärmesenke können die Batterien besonders gut gekühlt werden, weil am Verdampfer geringe Temperaturen im Bereich von z. B. 3° C auftreten, so dass eine besonders effektive und schnelle Kühlung der Batterien mittels des Wärmerohres möglich ist. Mittels eines Wärmeübertragers, z. B. Kühllamellen, kann die von dem Wärmerohr geleitete Wärme auch an die Umgebungsluft abgegeben werden. Ferner kommt als Wärmesenke auch die Karosserie des Kraftfahrzeuges in Betracht, weil aufgrund der relativ großen Masse und Oberfläche der Karosserie hier auch ausreichend die in Batteriemodulen auftretenden Wärmemengen von der Karosserie abgegeben werden können. Bei der Verwendung der Karosserie als Wärmesenke sind somit in vorteilhafter Weise keine zusätzlichen Einrichtungen, z. B. ein gesonderter Wärmeübertrager, erforderlich.

In einer weiteren Ausgestaltung ist die Wärmequelle eine elektrische Heizeinrichtung und/oder ein Wärmeübertrager zur Übertragung von Abwärme aus einem Verbrennungsmotor des Kraftfahrzeuges. Mittels einer elektrischen Heizeinrichtung können die Batterien des Batteriemoduls oder des Batteriemodulsystems gezielt und schnell auf die gewünschte Temperatur erwärmt werden. Bei der Verwendung der Abwärme des Verbrennungsmotors des Kraftfahrzeuges zum Erwärmen der Batterien muss in vorteilhafter Weise keine zusätzliche Energie zum Erwärmen der Batterie aufgewendet werden. Die Wärme aus dem Verbrennungsmotor kann beispielsweise mit einem Wärmeübertrager aus dem Motoröl, der Kühlflüssigkeit, dem Getriebeöl oder dem Abgas auf das Wärmerohr übertragen werden.

Insbesondere ist die Wärmesenke und/oder die Wärmequelle mittels Wärmekonvektion wärmeleitend mit dem wenigstens einen Wärmerohr verbindbar, z. B. mit einem Fluidkreislauf, so dass vorzugsweise die Wärmekonvention ein- und ausschaltbar. Bei der Übertragung der Wärme von der Wärmesenke und/oder der Wärmequelle auf das Wärmerohr oder umgekehrt mittelbar mittels eines Fluidkreislaufes kann in vorteilhafter Weise bei der Verwendung z. B. eines Ventils innerhalb des Fluidkreislaufes die Wärmeübertragung gezielt ein- und ausgeschaltet werden, so dass eine Steuerung des Erwärmens oder des Abkühlens der Batterien des Batteriemoduls bzw. des Batteriemodulsystems gezielt möglich ist.

### Kurze Beschreibung der Zeichnungen

Im Nachfolgenden werden zwei Ausführungsbeispiele der Erfindung unter Bezugnahme auf die beigefügten Zeichnungen näher beschrieben. Es zeigt:
- Fig. 1: eine perspektivische Ansicht eines Gehäuses mit Finnen eines Batteriemoduls,
- Fig. 2: eine perspektivische Ansicht des Gehäuses gemäß Fig. 1 mit Batterien,
- Fig. 3: einen schematisierten Schnitt des Batteriemoduls mit einem Wärmerohr und zwei Fluidkreisläufen in einer ersten Ausführungsform,
- Fig. 4: einen schematisierten Schnitt des Batteriemoduls mit dem Wärmerohr und dem Fluidkreislauf in einer zweiten Ausführungsform,
- Fig. 5: einen Schnitt eines Batteriemodulsystems mit vier Batteriemodulen und

- Fig. 6: eine Seitenansicht eines Kraftfahrzeuges mit einem Verbrennungsmotor.

### Ausführungsformen der Erfindung

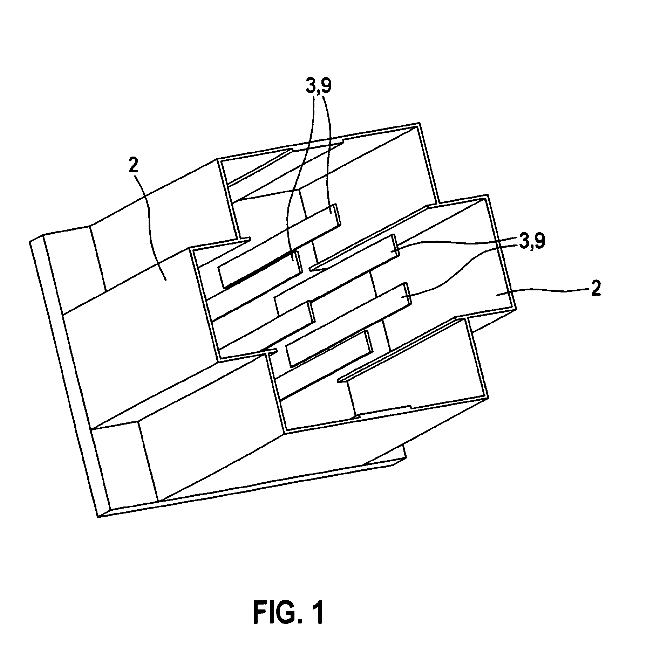

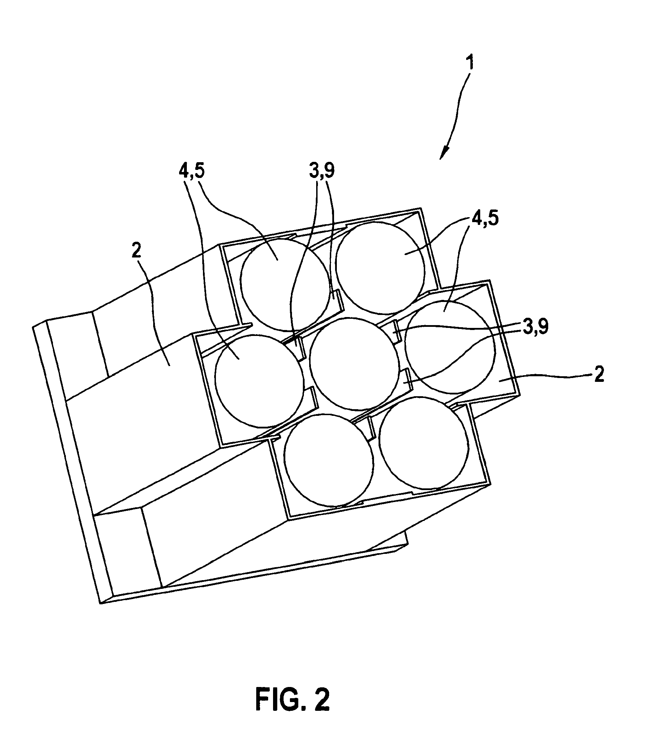

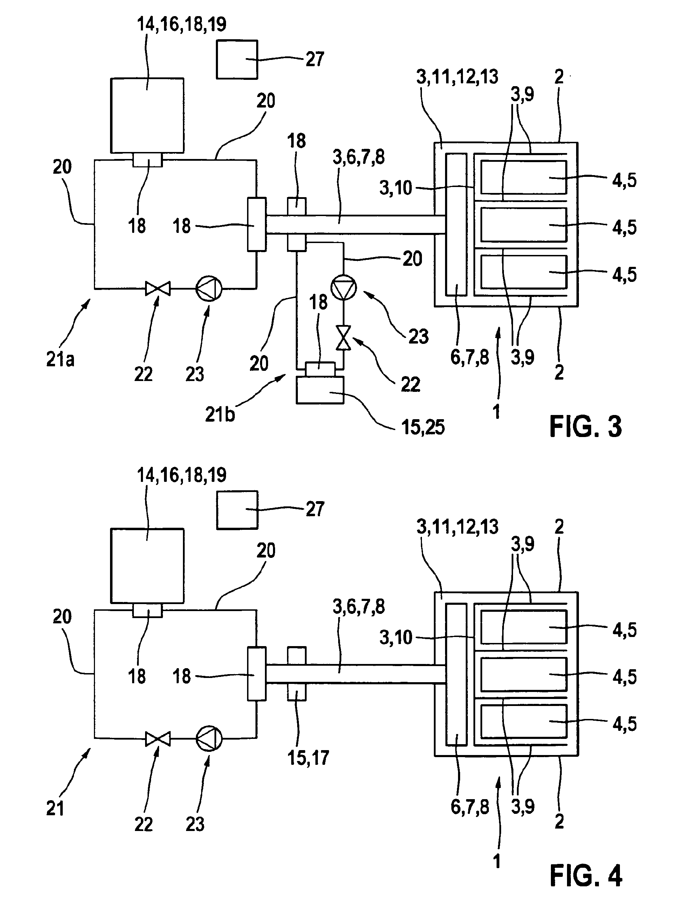

In Fig. 1 ist eine perspektivische Ansicht eines Gehäuses 2 eines Batteriemoduls 1 zur Aufnahme von Batterien 4 dargestellt. In Fig. 1 ist eine obere Wandung des Gehäuses 2 nicht abgebildet. Das Gehäuse 2 besteht aus Kunststoff und innerhalb des Gehäuses sind Finnen 9 aus Kupfer angeordnet. Zwischen den Finnen 9 und dem Gehäuse 2 sind als Lithiumionenbatterien 5 ausgebildete Batterien 4 angeordnet (Fig. 2). Elektrische Leitungen zum Ableiten und Zuführen von elektrischem Strom zu den Batterien 4 sind in den Fig. 1 und 2 nicht abgebildet. Der verbleibende Hohlraum innerhalb des Gehäuses 2 zwischen den Batterien 4 ist mit einer wärmeleitenden Flüssigkeit 11, z. B. Öl 12, insbesondere Silikonöl 13 aufgefüllt (Fig. 3). Die Finnen 9 und das Silikonöl 13 verfügen über eine hohe Wärmeleitfähigkeit, so dass die an der Oberfläche der Batterien 4 abgegebene Wärme gut abgeleitet werden kann und außerdem nur geringe Temperaturdifferenzen zwischen den Batterien 4 des Batteriemoduls 1 auftreten. Die Finne 9 und das Silikonöl 13 sind Mittel 3 zum Temperieren, d. h. zum Kühlen und/oder Erwärmen, der Batterien 4, weil diese Wärme zu den Batterien 4 leiten zum Erwärmen der Batterien 4 oder Wärme von den Batterien 4 ableiten zum Kühlen der Batterien 4. Das Gehäuse 2 ist fluiddicht abgeschlossen und eine nicht dargestellte Membrane ermöglicht einen Druckausgleich innerhalb des Gehäuses 2, um beispielsweise beim Erwärmen und/oder Abkühlen unterschiedliche Volumenänderungen abzupuffern. Die Flüssigkeit 11 ist elektrisch nicht leitend.

In Fig. 3 ist ein schematisierter Schnitt eines Batteriemoduls 1 mit einem Wärmerohr 6 als Mittel 3 und zwei Fluidkreisläufen 21 bzw. 21 a und 21 b dargestellt. Innerhalb des Gehäuses 2 des Batteriemoduls 1 sind sieben Lithiumionenbatterien 5 angeordnet, von denen in Fig. 3 aufgrund der Schnittdarstellung nur drei Lithiumionenbatterien 5 dargestellt sind. Zwischen den Lithiumionenbatterien 5 befinden sich die Finnen 9 aus Kupfer sowie auch zwischen den Lithiumionenbatterien 5 und dem Gehäuse 2. An einem oberen Ende der Lithiumionenbatterien 5 sind die Finnen 9 mit einer Platte 10 aus Kupfer thermisch und mechanisch verbunden. An die Platte 10 ist thermisch und mechanisch das Wärmerohr 6, z. B. eine Heatpipe 7 oder ein Thermosyphon 8, verbunden. Das Wärmerohr 6 ist durch das Gehäuse 2 durchgeführt und im Endbereich des außerhalb des Gehäuses 2 ausgebildeten Wärmerohres 6 sind zwei Wärmeübertrager 18 bzw. Wärmeaustauscher 18 angeordnet. An den beiden Wärmeübertragern 18 sind die beiden Fluidkreisläufe 21 separat angeschlossen. Innerhalb des Fluidkreislaufes 21, der im Wesentlichen von einer Leitung 20 gebildet wird durch die ein Fluid, z. B. Luft oder Flüssigkeit, geleitet wird, ist ein Ventil 22 und eine Pumpe 23 angeordnet. Ferner ist ein erster Fluidkreislauf 21 a mittels eines Wärmeübertragers 18 mit einer Wärmesenke 14 thermisch verbunden und der zweite Fluidkreislauf 21 b analog mit einem Wärmeübertrager 18 mit einer Wärmequelle 15 verbunden.

Die Wärmesenke 14 kann bei der Verwendung des Batteriemoduls 1 in einem Kraftfahrzeug 26 beispielsweise ein Verdampfer 16 einer Klimaanlage 27 des Kraftfahrzeuges 26 sein, ein Wärmeübertrager 18 zur Übertragung von Wärme an die Umgebungsluft oder eine Karosserie 19 des Kraftfahrzeuges 26. Zum Kühlen der Batterien 4 in dem Gehäuse 2 ist somit der erste Fluidkreislauf 21 a eingeschaltet, d. h. das Ventil 22 ist geöffnet und die Pumpe 23 ist im Betrieb. Das durch die Leitung 20 strömende Fluid nimmt dabei an dem Wärmeübertrager 18, der an dem Wärmerohr 6 angeordnet ist, Wärme auf und gibt die Wärme mittels des Wärmeübertragers 18 an die Wärmesenke 14 ab. Somit können die Batterien 4 des Batteriemoduls 1 gekühlt werden. Zum Erwärmen der Batterien 4 des Batteriemoduls 1 wird der erste Fluidkreislauf 21 a abgeschaltet, d. h. das Ventil 22 geschlossen und die Pumpe 23 abgeschaltet. Der zweite Fluidkreislauf 21 b mit der Wärmequelle 15 wird eingeschaltet, d. h. das Ventil 22 wird geöffnet und die Pumpe 23 wird eingeschaltet. Dadurch wird die von der Wärmequelle 15 zur Verfügung gestellte Wärme von dem Fluid in der Leitung 20 aufgenommen und zu dem Wärmeübertrager 18 an dem Wärmerohr 6 geleitet. Das Wärmerohr 6 leitet die Wärme zu den Batterien 4 des Batteriemoduls 1, d. h. es werden von dem Wärmerohr 1 die Platte 10, die Finnen 9 und das Silikonöl 13 erwärmt. Die Steuerung und/oder Regelung des Erwärmens und/oder Abkühlens der Batterien 4 des Batteriemoduls 1 erfolgt mittels einer nicht dargestellten Steuereinrichtung. Ferner sind nicht dargestellte Temperatursensoren vorhanden, welche beispielsweise die Temperatur an den Batterien 4, den Wärmeübertragern 18 und der Wärmequelle 15 sowie der Wärmesenke 14 erfassen und zu deren nicht dargestellten Steuerungseinheit übermitteln. Als Wärmequelle 15 kann beispielsweise ein Verbrennungsmotor 25 des Kraftfahrzeuges 26 genutzt werden. Dadurch braucht zum Erwärmen der Batterien 4 keine zusätzliche Energie aufgewendet werden.

In Fig. 4 ist eine zweite Ausführungsform des Batteriemoduls 1 mit nur einem Fluidkreislauf 21 dargestellt. Das Kühlen der Batterien 4 des Batteriemoduls 1 erfolgt in analoger Weise zu der ersten Ausführungsform gemäß Fig. 3. Zum Erwärmen der Batterien 4 des Batteriemoduls 1 wird anstelle des zweiten Fluidkreislaufes 21b lediglich eine elektrische Heizeinrichtung 17 als Wärmequelle 15 genutzt. Die elektrische Heizeinrichtung 17 ist dabei unmittelbar an den Endbereich des Wärmerohres 6 angeordnet. Zum Erwärmen der Batterien 4 des Batteriemoduls 1 muss lediglich die elektrische Heizeinrichtung 17 eingeschaltet werden, so dass von dem Wärmerohr 6 mittels der Platte 5, den Finnen 4 und dem Silikonöl 13 die Batterien 4 erwärmt werden können. Zum Erwärmen der Batterien 4 wird somit die elektrische Heizeinrichtung 17 eingeschaltet und der Fluidkreislauf 21 ist dabei abgeschaltet, d. h. das Ventil 22 geschlossen und die Pumpe 23 abgeschaltet. Zum Kühlen der Batterien 4 des Batteriemoduls 1 wird in der zweiten Ausführungsform die elektrische Heizeinrichtung 17 abgeschaltet und der Fluidkreislauf 21 in Betrieb genommen, d. h. das Ventil 22 geöffnet und die Pumpe 23 eingeschaltet. Die Heizeinrichtung 17 sowie gegebenenfalls der Fluidkreislauf 21 können z. B. in einer Reserveradmulde, einem Kofferraum oder im Bereich einer Rücksitzbank des Kraftfahrzeuges 26 angeordnet werden.

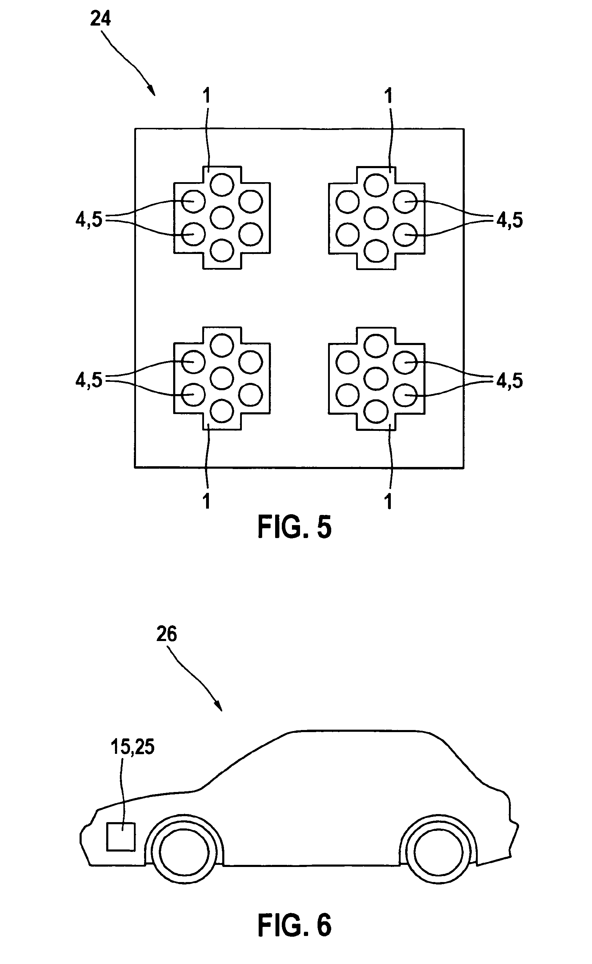

Mehrere Batteriemodule 1 können auch zu einem erfindungsgemäßen Batteriemodulsystem 24 verbunden werden (Fig. 5). In einem Batteriemodulsystem 24, beispielsweise für ein Personenfahrzeug- oder Nutzfahrzeug, mit 4 Batteriemodulen 1 mit je 7 Lithiumionenbatterien 5 befinden sich somit 28 Lithiumionenbatterien 5. Der modulare Aufbau gestattet damit eine bessere Skalierbarkeit, weil mit den identischen Batteriemodulen 1 unterschiedliche elektrische Leistungen für verschiedene Anwendungen einfach realisiert werden können.

In Fig. 6 ist ein Kraftfahrzeug mit einem Verbrennungsmotor 25 dargestellt. Der Verbrennungsmotor 25 dient als Wärmequelle 15 und dabei wird die Wärme beispielsweise von der Kühlflüssigkeit, dem Motoröl, dem Getriebeöl oder dem Abgas mittels eines Wärmeübertragers 18 zu dem Fluidkreislauf 21 geleitet (nicht dargestellt).

Die Einzelheiten der verschiedenen Ausführungsbeispiele sind miteinander kombinierbar, sofern nichts gegenteiliges erwähnt wird.

Insgesamt betrachtet sind mit dem erfindungsgemäßen Batteriemodul 1, dem erfindungsgemäßen Batteriemodulsystem 24 und dem erfindungsgemäßen Kraftfahrzeug 26 erhebliche Vorteile verbunden. Zum Temperieren, d. h. zum Kühlen und/oder Erwärmen, der Batterien 4 wird ein Wärmerohr 6 verwendet, so dass keine bewegten Teile, z. B. eine Fluidfördereinrichtung, zum Fördern eines Temperierfluides nicht mehr erforderlich ist. Der Energieaufwand zum Temperieren der Batterien 4 kann dadurch verringert werden und außerdem auch der Bauraumbedarf für das Batteriemodul 1. Ferner wird bei einer Verwendung in einer Raumstation aufgrund der nicht vorhandenen rotierenden Elemente keine negative Beeinflussungen des Dralles der Raumstation erfolgen. Die Batterien 4 sind in dem Gehäuse 2 mit einem minimalen Zwischenraum angeordnet, so dass eine hohe Energiedichte des Batteriemoduls 1 pro Volumeneinheit vorhanden ist, d. h. der Bauraumbedarf des Batteriemoduls 1 ist gering.

## Patentansprüche

1. Batteriemodul (1), umfassend ein Gehäuse (2), wenigstens eine in dem Gehäuse (2) angeordnete Batterie (4), wenigstens ein Mittel (3) zum Temperieren der wenigstens einen Batterie (4), wobei das wenigstens eine Mittel (3) wenigstens ein Wärmerohr (6) zum Leiten von Wärme von und/oder zu der wenigstens einen Batterie (4) umfasst und zwischen wenigstens zwei Batterien (4) wenigstens eine Finne (9) aus einem wärmeleitenden Material, z. B. Metall, insbesondere Kupfer, **dadurch gekennzeichnet, dass**
wenigstens zwei Finnen (9) mit einer Platte (10) aus einem wärmeleitenden Material, z. B. Metall, wärmeleitend verbunden sind und an der Platte (10) wärmeleitend wenigstens ein Wärmerohr (6) angeordnet ist.

2. Batteriemodul nach Anspruch 1,
**dadurch gekennzeichnet, dass**
die wenigstens eine Batterie (4) in dem Gehäuse (2) in einer, vorzugsweise elektrisch nicht leitenden, Flüssigkeit zur Wärmeleitung angeordnet ist.

3. Batteriemodul nach Anspruch 2,
**dadurch gekennzeichnet, dass**
die Flüssigkeit ein Öl, z. B. Silikonöl, ist.

4. Batteriemodul nach einem oder mehreren der vorhergehenden Ansprüche,
**dadurch gekennzeichnet, dass**
das Gehäuse (2) wenigstens teilweise aus Kunststoff oder Metall besteht.

5. Batteriemodul nach einem oder mehreren der vorhergehenden Ansprüche,
**dadurch gekennzeichnet, dass**
die wenigstens eine Batterie (4) eine Lithiumionenbatterie (5) ist.

6. Batteriemodul nach einem oder mehreren der vorhergehenden Ansprüche,
**dadurch gekennzeichnet, dass**
das wenigstens eine Wärmerohr (6) eine Heatpipe (7) oder ein Thermosyphon (8) ist.

7. Batteriemodulsystem (24) mit mehreren Batteriemodulen (1),
**dadurch gekennzeichnet, dass**
das Batteriemodulsystem (24) wenigstens ein Batteriemodul (1) nach einem oder mehreren der vorhergehenden Ansprüche umfasst.

8. Batteriemodulsystem nach Anspruch 7,
**dadurch gekennzeichnet, dass**
wenigstens zwei Batteriemodule (1) mittels des wenigstens einen Wärmerohres (6) wärmeleitend miteinander verbunden sind zum Temperieren der wenigstens einen Batterie (4).

9. Kraftfahrzeug (26),
**dadurch gekennzeichnet, dass**
das Kraftfahrzeug (26) wenigstens ein Batteriemodul (1) gemäß einem oder mehrerer der Ansprüche 1 bis 6 und/oder ein Batteriemodulsystem (24) gemäß Anspruch 7 oder 8 umfasst.

10. Kraftfahrzeug nach Anspruch 9,
**dadurch gekennzeichnet, dass**
zum Kühlen der wenigstens einen Batterie (4) das wenigstens eine Wärmerohr (6) wärmeleitend mit einer Wärmesenke (14) verbunden oder verbindbar ist ist und/oder zum Erwärmen der wenigstens einen Batterie (4) das wenigstens eine Wärmerohr (6) mit einer Wärmequelle (15) wärmeleitend verbunden oder verbindbar ist.

11. Kraftfahrzeug nach Anspruch 10,
**dadurch gekennzeichnet, dass**
die Wärmesenke (14) ein Verdampfer (16) einer Klimaanlage (27) und/oder ein Wärmeübertrager (18) zur Übertragung von Wärme an die Umgebungsluft und/oder eine Karosserie (19) des Kraftfahrzeuges (26) ist.

12. Kraftfahrzeug nach Anspruch 10 oder 11,
**dadurch gekennzeichnet, dass**
die Wärmequelle (15) eine elektrische Heizeinrichtung (17) und/oder ein Wärmeübertrager (18) zur Übertragung von Abwärme aus einem Verbrennungsmotor (25) des Kraftfahrzeuges ist.

13. Kraftfahrzeug nach Anspruch 10, 11 oder 12,
**dadurch gekennzeichnet, dass**
die Wärmesenke (14) und/oder die Wärmequelle (15) mittels Wärmekonvektion wärmeleitend mit dem wenigstens einen Wärmerohr (6) verbindbar ist, z. B. mit einem Fluidkreislauf, so dass vorzugsweise die Wärmekonvention ein- und ausschaltbar ist.

## Claims

1. Battery module (1), comprising a housing (2), at least one battery (4) arranged in the housing (2), and at least one means (3) for controlling the temperature of the at least one battery (4), the at least one means (3) comprising at least one heat pipe (6) for conducting heat from and/or to the at least one battery (4) and, between at least two batteries (4), at least one fin (9) made from a heat-conducting material, for example metal, in particular copper, **characterized in that** at least two fins (9) are connected heat-conductively to a plate (10) made from a heat-conducting material, for example, metal, with at least one heat pipe (6) being arranged heat-conductively on the plate (10).

2. Battery module according to Claim 1, **characterized in that** the at least one battery (4) is arranged in the housing (2) in a preferably electrically non-conductive fluid for heat conduction.

3. Battery module according to Claim 2, **characterized in that** the fluid is an oil, for example silicone oil.

4. Battery module according to one or more of the preceding claims, **characterized in that** the housing (2) consists at least partially of plastic or metal.

5. Battery module according to one or more of the preceding claims, **characterized in that** the at least one battery (4) is a lithium-ion battery (5).

6. Battery module according to one or more of the preceding claims, **characterized in that** the at least one heat pipe (6) is a heat pipe (7) or thermosyphon (8).

7. Battery module system (24) having a plurality of battery modules (1), **characterized in that** the battery module system (24) comprises at least one battery module (1) according to one or more of the preceding claims.

8. Battery module system according to Claim 7, **characterized in that** at least two battery modules (1) are connected to one another heat-conductively by means of the at least one heat pipe (6) for the purpose of controlling the temperature of the at least one battery (4).

9. Motor vehicle (26), **characterized in that** the motor vehicle (26) comprises at least one battery module (1) according to one or more of Claims 1 to 6 and/or a battery module system (24) according to Claim 7 or 8.

10. Motor vehicle according to Claim 9, **characterized in that**, to cool the at least one battery (4), the at least one heat pipe (6) is connected or connectable heat-conductively to a heat sink (14) and/or, to heat the at least one battery (4), the at least one heat pipe (6) is connected or connectable heat-conductively to a heat source (15).

11. Motor vehicle according to Claim 10, **characterized in that** the heat sink (14) is an evaporator (16) of an air-conditioning installation (27) and/or a heat exchanger (18) for the transfer of heat to the ambient air and/or a body (19) of the motor vehicle (26).

12. Motor vehicle according to Claim 10 or 11, **characterized in that** the heat source (15) is an electrical heating device (17) and/or a heat exchanger (18) for the transfer of waste heat from an internal combustion engine (25) of the motor vehicle.

13. Motor vehicle according to Claim 10, 11 or 12, **characterized in that** the heat sink (14) and/or the heat source (15) are/is connectable heat-conductively to the at least one heat pipe (6) by means of heat convection, for example to a fluid circuit, so that preferably heat convection can be switched on and off.

## Revendications

1. Module de batterie (1) comportant
un boîtier (2),
au moins une batterie (4) disposée dans le boîtier (2),
au moins un moyen (3) de contrôle de la température de la ou des batteries (4),
le ou les moyens (3) comportant au moins un tube caloporteur (6) qui conduit la chaleur provenant de la ou des batteries (4) ou vers ces dernières et au moins une ailette (9) en matériau conduisant la chaleur, par exemple un métal et en particulier le cuivre, entre deux ou plusieurs batteries (4),
**caractérisé en ce que**
au moins deux ailettes (9) sont reliées de manière thermiquement conductrice à une plaque (10) en matériau conduisant la chaleur, par exemple un métal, et
**en ce qu'**au moins un tube caloporteur (6) est disposé sur la plaque (10) de manière à conduire la chaleur.

2. Module de batterie selon la revendication 1, **caractérisé en ce que** la ou les batteries (4) sont disposées dans le boîtier (2) dans un liquide conduisant la chaleur et de préférence ne conduisant pas l'électricité.

3. Module de batterie selon la revendication 2, **caractérisé en ce que** le liquide est une huile, par exemple une huile de silicone.

4. Module de batterie selon l'une ou plusieurs des revendications précédentes, **caractérisé en ce que** le boîtier (2) est réalisé au moins en partie en matière synthétique ou en métal.

5. Module de batterie selon l'une ou plusieurs des revendications précédentes, **caractérisé en ce que** la ou les batteries (4) sont des batteries (5) à ions lithium.

6. Module de batterie selon l'une ou plusieurs des revendications précédentes, **caractérisé en ce que** le ou les tubes caloporteurs (6) sont un conduit caloporteur (7) ("heatpipe") ou un thermosiphon (8).

7. Système (24) de modules de batterie présentant plusieurs modules (1) de batterie, **caractérisé en ce que** le système (24) de modules de batterie comporte au moins un module (1) de batterie selon l'une ou plusieurs des revendications précédentes.

8. Système de modules de batterie selon la revendication 7, **caractérisé en ce qu'**au moins deux modules (1) de batterie sont reliés l'un à l'autre de manière thermoconductrice au moyen du ou des tubes caloporteurs (6) en vue de contrôler la température de la ou des batteries (4).

9. Véhicule automobile (26), **caractérisé en ce que** le véhicule automobile (26) comporte au moins un module (1) de batterie selon l'une ou plusieurs des revendications 1 à 6 et/ou un système (24) de modules de batterie selon les revendications 7 ou 8.

10. Véhicule automobile selon la revendication 9, **caractérisé en ce que** pour refroidir la ou les batteries (4), le ou les tubes caloporteurs (6) sont reliés ou peuvent être reliés de manière thermoconductrice à un drain thermique (14) et/ou **en ce que** pour chauffer la ou les batteries (4), le ou les tubes caloporteurs (6) sont reliés ou peuvent être reliés de manière thermoconductrice à une source de chaleur (15).

11. Véhicule automobile selon la revendication 10, **caractérisé en ce que** le drain thermique (14) est l'évaporateur (16) d'une installation de climatisation (27) et/ou un dispositif (18) de transfert de chaleur qui transfère de la chaleur à l'air ambiant, et/ou le châssis (19) du véhicule automobile (26).

12. Véhicule automobile selon les revendications 10 ou 11, **caractérisé en ce que** la source de chaleur (15) est un dispositif (17) de chauffage électrique et/ou un dispositif (18) de transfert de chaleur qui transfère la chaleur dégagée par le moteur à combustion interne (25) du véhicule automobile.

13. Véhicule automobile selon les revendications 10, 11 ou 12, **caractérisé en ce que** le drain thermique (14) et/ou la source de chaleur (15) peuvent être reliés de manière thermoconductrice par convection thermique avec le ou les tubes caloporteurs (6), par exemple avec un circuit de liquide, de telle sorte que la convection thermique puisse de préférence être branchée et débranchée.
